# EUROPEAN PATENT APPLICATION

(11) **EP 2 789 446 A1**
(43) Date of publication of application: **15.10.2014**
(21) Application number: 12855439.1
(22) Date of filing: 30.08.2012
(51) Int. Cl.: B29C 45/14, B29C 45/16

(54) **METHOD FOR MANUFACTURING INTEGRATED MOLDED GLASS ARTICLE AND INTEGRATED MOLDED GLASS ARTICLE**

(30) Priority: 08.12.2011 JP 2011269261; 19.06.2012 JP 2012137993
(71) Applicant: Yoshida Technoworks Co. Ltd., Tokyo 131-0044 (JP)
(72) Inventor: AIDA, Naoto, Tokyo 131-0044 (JP); NAKAYAMA, Tomoaki, Tokyo 131-0044 (JP); KABASAWA, Junnichi, Tokyo 131-0044 (JP)
(74) Representative: Santarelli
(86) International application number: PCT/JP2012/071984
(87) International publication number: WO 2013/084550

(57) **Abstract**

In the present invention a highly reliability and waterproof glass integrally molded product is manufactured by glass insert molding. A method of manufacturing a glass integrally molded product 1a having a plate glass 20 fixed inwards of a frame body 10a integrally molded with a resin, the frame body having an upper surface 11 continuous with an upper surface 21 of the plate glass, the frame body having an edge portion 13 that supports a rim of a lower surface 22 of the plate glass,
the method fixing the lower surface rim of the plate glass and an upper surface 14 of the edge portion by forming, to the lower surface rim of the plate glass, a resin layer 30 in a frame shape that extends around the lower surface rim of the plate glass, the resin layer having compatibility with the resin configuring the frame body, the resin layer functioning as a buffer to alleviate stress applied to the plate glass at the time of molding the frame body, disposing the plate glass in a mold (41, 42) to mold the frame body, and molding the frame body by injecting the melted resin 110 into the mold in a closed state.

## Description

### Technical Field

The present invention relates to a manufacturing method of a glass integrally molded product. Specifically, the invention relates to a method to manufacture a glass integrally molded product with a plate-like glass fixed inwards of a frame body by glass insert molding. The invention further relates to a glass integrally molded product.

### Background

In Patent Literature 1 described below, there is disclosed a manufacturing method of a glass insert molded product with an integrally molded window frame with a plate glass for a window pane as an insert member. Specifically, there is disclosed a manufacturing method of a plate glass fitted article such as a sash. In this manufacturing method, a tight material with a U-shaped cross-section is fitted in the edge of the glass, and an elastic member is attached to a back surface of the tight material In this state the glass is disposed inside molds, and resin, that is to become a frame such as the sach, is injected and molded. At this time, to prevent glass from breaking with heat from the resin in the melted state, and to prevent the tight material from deforming, a reactive injection resin is used. The elastic member absorbs stress applied to the glass as the molded frame cools down.

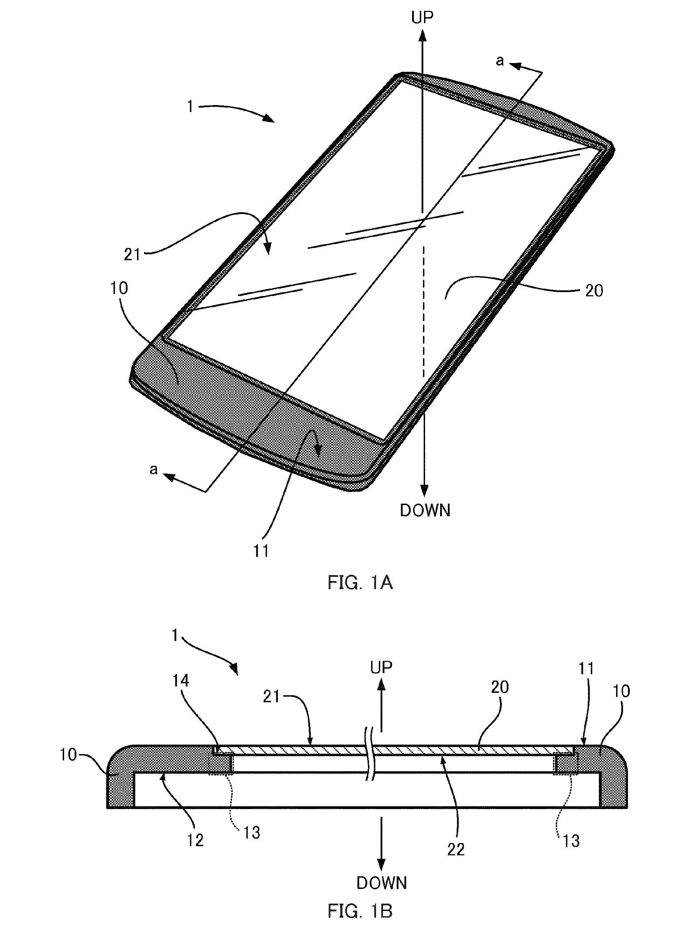

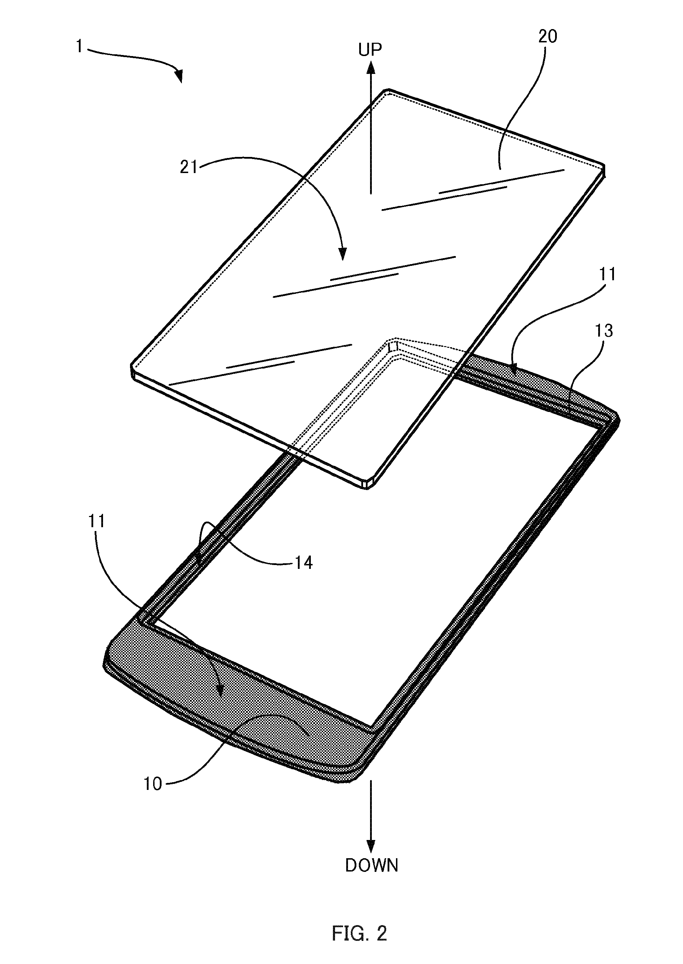

By the way, as an example of a member and a component having a configuration similar to the sash disclosed in Reference 1, there is a front cover of a multifunctional portable telephone, known as a smartphone, configured with such as a touch panel (below, a display panel) that is a display device or that is both a display device and an input device in almost the entire region of the front surface. Fig. 1 shows an example of this front cover 1. Fig. 1A is a perspective view of the front cover 1, and Fig. 1B is an a-a arrow sectional view of Fig. 1A. Fig. 2 shows a perspective view of the front cover 1 disassembled into components. The front cover 1 is a component in a substantially rectangular plate shape that is shallow configuring a front side of an exterior case for storing an internal circuit of the smartphone. Such a front cover 1 is configured with a frame body 10 made of a resin integrally molded product with a region corresponding to the bottom of the plate open widely, and a plate-shaped glass (below, glass plate) 20 arranged in the inner periphery of the frame body 10. As shown in the figure, in the front cover 1, in the case that a direction in which the glass plate 20 is facing outwards is considered upwards, the glass plate 20 has a function of protecting the display panel, while causing the display of the display panel arranged to the lower surface 22 side to be transparent to the upper surface 11 side.

The front cover 1 forms a surface in which the upper surface 11 of the frame body 10 and an upper surface 21 of the glass plate 20 are continuous and in most cases is made to be flush. As shown in Fig. 1B, the inner periphery of the frame body 10 is formed with an edge portion 13 that is made thin by notching it to a thickness of the glass plate 20 from the top towards the bottom, and an upper surface 14 of this edge portion 13 supports the rim of the lower surface 22 of the glass plate 20 from below. This front cover 1 is usually assembled by manufacturing just the frame body 10 by injection molding and fitting the glass plate 20 into the inner periphery of the frame body 10. In other words, with the edge portion 13 of the frame body 10 as an underlying support, the glass plate 20 is dropped in the frame body 10 from above. The upper surface 14 of the edge portion 13 and the lower surface 22 of the glass plate 20 that contact each other are adhered using an adhesive.

### Citation List

### Patent Literature

PTL 1 Japanese Patent Application Laid-open Publication No.06-246782

### Summary

### Technical Problem

Recent portable electrical appliances having a thin display device such as a smartphone, a portable music player, a portable LED television, and a digital camera, require high waterproof property, under the assumption that the portable electrical device will be used in the kitchen, the bathroom, or when raining. Many of these electrical appliances, similar to the front cover of the smartphone, are arranged with a plate-shaped glass in the inner periphery of the resin frame body, and includes the component (below, referred to as a glass integrally molded product) forming a continuous surface with the front surface of the frame body and the front surface of the glass plate.

A conventional glass integrally molded product was manufactured by fitting in the glass plate in the already molded frame body as described above. Thus, to increase waterproof performance between the frame body and the glass plate, an O ring is interposed between the rim of the lower surface of the glass plate and the upper surface of the edge portion, or a waterproof resin was filled in the part where the glass plate and the frame body comes into contact. Thus, components and material to increase waterproof property and additional steps were necessary. Thus, it was difficult to reduce costs.

The inventors of this invention considered increasing waterproof performance and also simplifying manufacturing steps of the glass integrally molded product such as the above described front cover. In fact, the front cover and the like however, has to be configured as a continuous surface between the glass surface and the frame body. Thus different from the sash, at the time of injection molding the edge of the glass plate that contacts the high temperature and high pressure melted resin, which becomes the frame body, cannot be sandwiched and held with any kind of buffer material. Thus, in the case that the glass plate is molded as is as an insert article, there is a high possibility that the edge of the glass may break with heat and pressure at the time of molding. The glass and the resin forming the frame body do not have adhesiveness in both of the materials themselves, and in fact do not have as much waterproof performance as expected. Further, there is also a problem that the glass plate is prone to fall out of the frame body due to weak adhesiveness which relates to reliability. With the technique disclosed in Reference 1, before injection molding, the tight material is sandwiched and held with the glass plate, and the buffer material is arranged in the rim of the tight material. Reactive resin is used as resin to be injected. Thus, there are many additional members and steps, and the resin itself is also special, and it is practically impossible to apply the technique disclosed in Reference 1 to the glass integrally molded product. Of course, decreasing costs is also difficult.

The present invention aims to provide a method to manufacture with glass insert molding a glass integrally molded product having high reliability and waterproof performance without causing increase in costs. Note that, other features will become clear below.

### Solution to Problem

The present invention to achieve the above objects is a method for manufacturing a glass integrally molded product having a plate glass fixed inwards of a frame body of resin, wherein the frame body has an upper surface to be continuous with an upper surface of the plate glass and an edge portion for supporting a rim of a lower surface of the plate glass,

the method comprising the steps of forming a resin layer to the lower surface of the plate glass in a frame shape to extend around the lower rim of the plate glass, the resin layer having compatibility with the resin of the frame body and functioning as a buffer to alleviate stress applied to the plate glass at the time of molding the frame body,
disposing the plate glass in molds to mold the frame body, and
injecting the melted resin into the molds in a closed state to form the frame body,
whereby the lower rim of the plate glass is integrally fixed to the edge portion of the frame bod.

The above method of manufacturing a glass integrally molded product, may be a method further comprising a step of putting a transfer film across the molds, the film being an in-mole use and having a decoration film laminated on a base film, wherein,
the transfer film putting step is carried out such that the base film of the transfer film and an inner surface of one of the molds are opposed,
the plate glass disposing step is carried out such that the transfer film is interposed between the inner surface of the mold and the upper surface of the plate glass, and
the melted resin is injected while the transfer film is sandwiched with the molds in the closed state,
whereby the frame body is molded and the decoration film is transferred to a surface of the frame body.

The method may be a method of manufacturing a glass integrally molded product, wherein the resin layer forming step is carried out by printing a resin on the plate glass, the resin having a function as a decoration at the time when viewed through the upper surface of the plate glass, and the injection molding step is carried out to mold the frame body into a shape in which the printed layer is visible through the upper surface of the plate glass. Further, the resin layer forming step may be carried out by printing a resin having a decorative function on the lower surface of the plate glass to form a decoration layer and then printing another resin having compatibility with the resin configuring the frame body on the lower side of the decoration layer to form an adhesive layer.

The method may be a method of manufacturing the glass integrally molded product wherein an intermediate resin layer is formed in between the decoration layer and the adhesive layer with a resin that is more elastically deformable than the resins that form the decoration layer and the adhesive layer. Further the method may be a method of manufacturing the glass integrally molded product wherein the upper surface region of the plate glass is included in the lower surface region thereof when seen from above, and a side surface of the plate glass has a slanted surface inclined outwardly from the upper surface to the lower surface, and wherein the resin layer printing step is carried out such that the decoration layer and the lower layer laminated below the decoration layer are aligned in outer edges and that a width of the decoration layer is made wider than the lower layer.

In any one of the methods set forth above, the method may further comprise a step of forming a pressure buffer portion in between the resin layer printing step and the plate glass disposing step, wherein the buffer portion extends around the side surface of the plate glass in contact with a portion of the lower surface and the side surface of the resin layer, and the buffer portion is formed with a resin that is more elastically deformable than the resin forming the frame body and the resin layer.

The present invention covers a glass integrally molded product having a plate glass fixed inwards of a frame body of resin. The product comprises the frame body having an upper surface continuous with an upper surface of the plate glass and an edge portion supporting a rim of a lower surface of the plate glass, wherein the rim of the plate glass supported by the edge portion of the frame body is formed with a resin layer, which is fixed to the upper surface of the edge portion of the frame body and functions as a buffer between an upper surface of the edge portion and the rim of the glass lower surface.

The glass integrally molded product may be a such product wherein the upper surface of the resin layer is decorated so as to be visible through the upper surface of the plate glass. Further the product may be a such product wherein an adhesive layer is laminated to a lower side of the decorated layer and fixed to the upper surface of the edge portion.

The glass integrally molded product may be a such product wherein an intermediate layer is interposed in between the decoration layer and the adhesive layer, and the intermediate layer is formed of a resin that is more elastically deformable than resins that forms the decoration layer and the adhesive layer.

The glass integrally molded product may be a such product wherein the upper surface region of the plate glass is included in the lower surface region thereof when seen from above, and a side surface of the plate glass has a slanted surface inclined outwardly from the upper surface to the lower surface, and wherein the resin layers forming the frame shaped decoration layer and the lower layer laminated below the decoration layer are aligned in outer edges, and a width of the decoration layer is made wider than the lower layer.

In any one of the products set forth above, the product may comprise a pressure buffer portion extending around the side surface of the plate glass in contact with a portion of the lower surface and the side surface of the resin layer, wherein the buffer portion is formed with a resin that is more elastically deformable than the resins forming the frame body and the resin layer.

### Advantageous Effects of Invention

According to the manufacturing method of this invention, a glass integrally molded product having high reliability and waterproof performance can be manufactured by glass insert molding.

### Brief Description of Drawings

Fig. 1 is a diagram showing a configuration of a front cover of a smartphone manufactured with a conventional method.
Fig. 2 is a exploded perspective view of the conventional front cover manufactured with the conventional method.
Fig. 3 is an external view of a front cover manufactured with a manufacturing method according to a first embodiment of the present invention.
Fig. 4 is a sectional view showing a configuration of the front cover manufactured with the manufacturing method according to the first embodiment.
Fig. 5 is a diagram showing a flow of the manufacturing method according to the first embodiment.
Fig. 6 is a diagram showing a modified example of the front cover.
Fig. 7 is a diagram showing another example of the modified example shown in Fig. 6.
Fig. 8 is an external view of a front cover manufactured with a method according to a second embodiment of this invention.
Fig. 9 is a sectional view showing a configuration of the front cover manufactured with the method of the second embodiment.
Fig. 10 is a diagram showing a configuration of a transfer film to be used in the manufacturing method according to the second embodiment.
Fig. 11 is a diagram showing a flow of the manufacturing method according to the second embodiment.
Fig. 12 is an external view of the front cover manufactured with a method according to a third embodiment of this invention.
Fig. 13 is a diagram showing the exterior of the glass plate configuring the front cover manufactured with the method according to the third embodiment.
Fig. 14 is a diagram showing a configuration of the front cover manufactured with the method according to the third embodiment.
Fig. 15 is a diagram showing a flow of the manufacturing method according to the third embodiment.
Fig. 16 is a diagram showing a configuration of another front cover manufactured with the method according to the third embodiment.
Fig. 17 is a diagram showing a configuration of the front cover manufactured with a method according to another example of this invention.
Fig. 18 is a schematic diagram of a manufacturing method according to the other embodiment.

### Description of Embodiments

A front cover of a smartphone is given as an example of a glass integrally molded product molded with a manufacturing method of the present invention. A specific manufacturing method according to a configuration and the like of the front cover is explained as an embodiment of this invention.

### === First Embodiment ===

### <External appearance and configuration of glass integrally molded product>

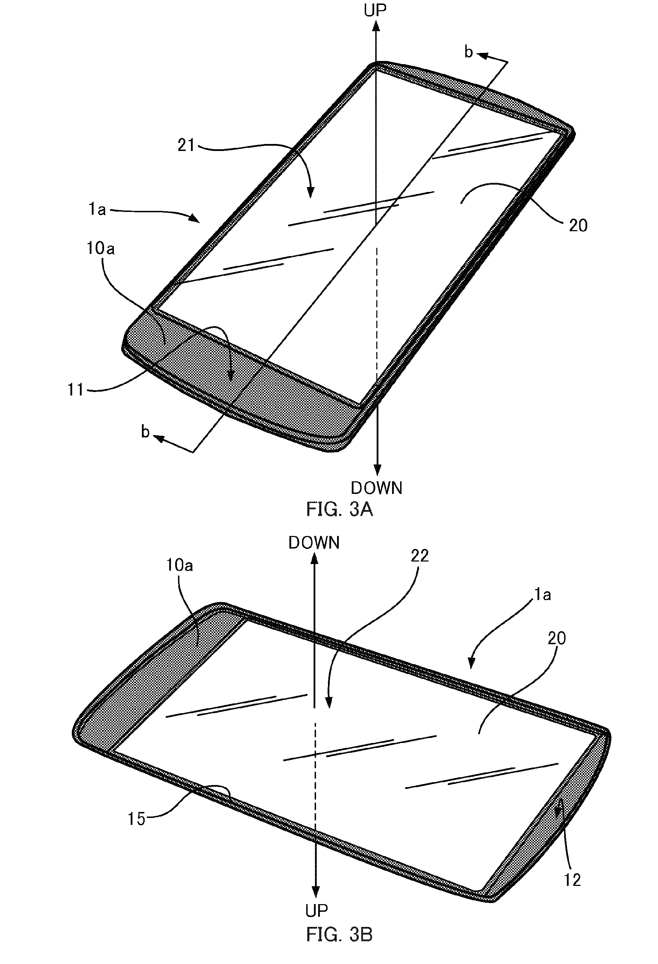

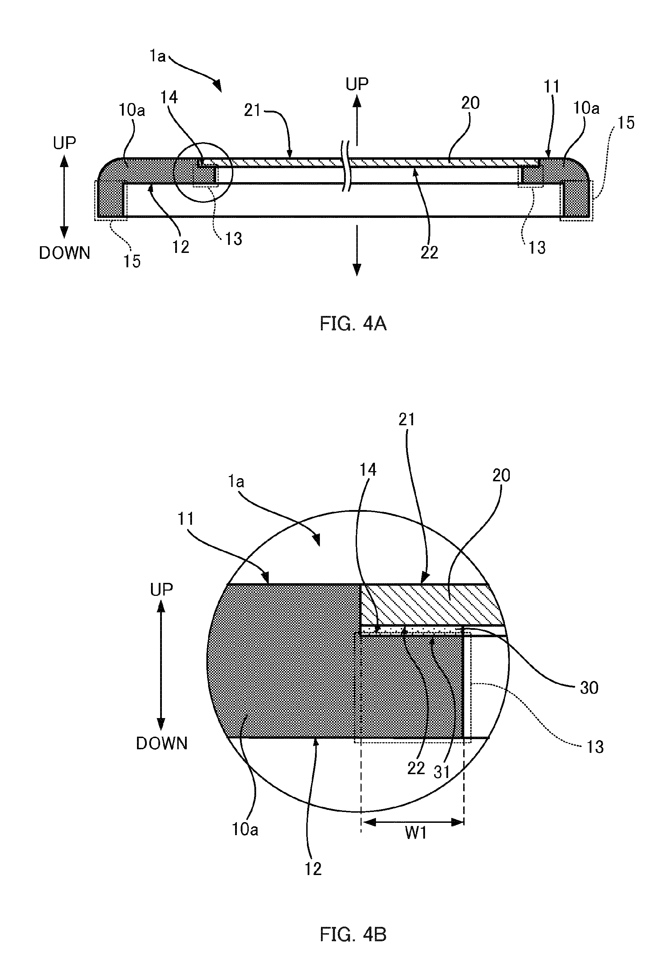

Fig. 3 is a schematic diagram of a front cover 1a molded with a manufacturing method according to a first embodiment. Here, an up-down relationship of the front cover 1a is provided as shown in Figs. 1 and 2. Fig. 3A is a perspective view of the front cover 1a seen from above, and Fig. 3B is a perspective view seen from below. Fig. 4 is a b-b arrow sectional view of Fig. 3A, and Fig. 4A is an overall view of the section and Fig. 4B is an enlarged view inside a circle in Fig. 4A. The front cover 1a, that is a shallow substantially rectangular plate shape, similar to a conventional front cover 1, is arranged with the glass plate 20 in a part corresponding to the bottom surface of the plate, and a frame body 10a surrounds the periphery of the glass plate 20. In the front cover 1a, a step height from the upper surface 14 of the edge portion 13 of the frame body 10a to the upper surface 11 of the frame body 10a itself almost matches the thickness of the glass plate 20, and there is no step height between an outer periphery of the upper surface 21 of the glass plate 20 and an inner periphery of the frame body 10a, and both form a continuous surface. Note that, in this example, the upper surface outer periphery of the frame body 10a is almost flat, and the upper surface 21 of the glass plate 20 and the upper surface 11 of the frame body 10a are almost flush.

As shown in Fig. 3, the front cover 1a molded with the manufacturing method according to the first embodiment has a similar external appearance as the conventional front cover 1 shown in the drawing. As shown in Fig. 4A, the upper surface 14 of the edge portion 13 of the frame body 10a is configured to support the lower surface 22 of the glass plate 20. Up to here, the configuration is the same as the conventional front cover 1. But, as shown in Fig. 4B, the front cover 1a molded with the manufacturing method according to the first embodiment is different from the configuration of the conventional front cover 1 in that a resin layer 30 is interposed between a peripheral edge of the lower surface 22 of the glass plate 20 and the upper surface 14 of the edge portion 13. In this example, the resin layer 30 is formed over a width W1 which is the same width as the upper surface 14 of the edge portion 13. A lower surface 31 of the resin layer 30 and the upper surface 14 of the edge portion 13 are fixed together by heat bonding of the resins in a compatible state, and sufficient reliability and waterproof performance are ensured.

### <Manufacturing method>

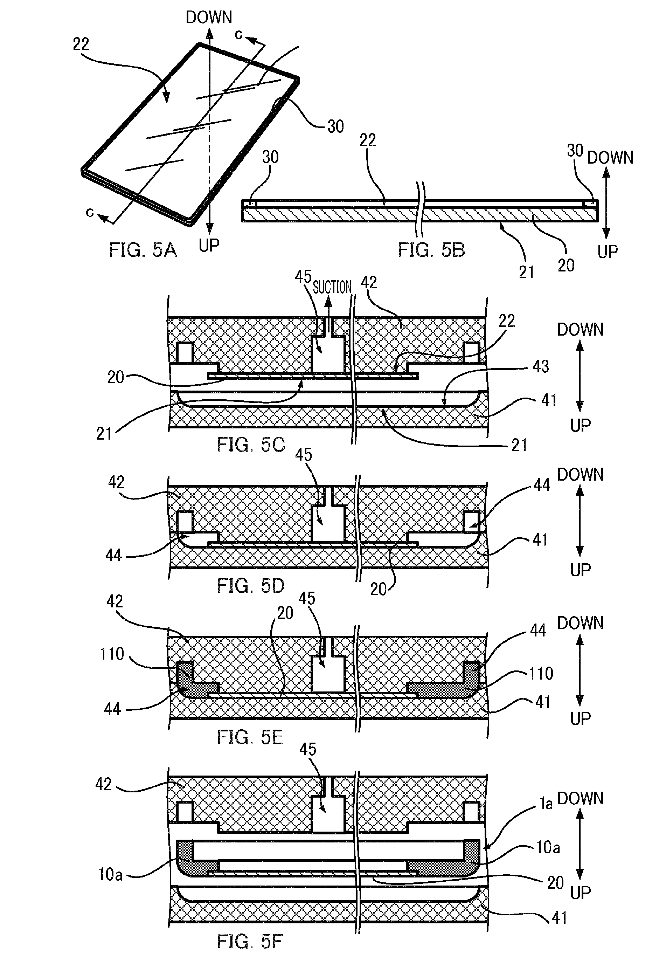

This invention is a method that makes it possible to manufacture by glass insert molding a glass integrally molded product, such as a front cover, which was difficult to manufacture by glass insert molding conventionally. As the first embodiment of this invention, the manufacturing method of the front cover 1a shown in Fig. 3 and Fig. 4 is described. Fig. 5A to Fig. 5F show the flow of this manufacturing method. First, the resin layer 30 is formed by printing on the periphery of the lower surface 22 of the glass plate 20 (Fig. 5A, Fig. 5B). Note that, Fig. 5A is a perspective view of the glass plate 20 seen from below formed with this resin layer 30, and Fig. 5B is a c-c arrow sectional view of Fig. 5A. The resin layer 30 is compatible with melted resin 110 that forms the frame body 10, and in this embodiment, acrylic resin is formed by a known silk printing method to have a thickness of approximately 4 to 8 µm. Of course, the resin layer 30 can be formed of not only acrylic resin, but may be formed of resin compatible with the melted resin 110, and can apply an appropriate resin, for example, such as urethane, epoxy, polyester, and vinyl. The thickness of the resin layer 30 is also not limited to the above numerical values.

Next, the glass plate 20 printed with this resin layer 30 is disposed inside molds (41, 42) (Fig. 5C). In this example, the molds (41, 42) divided into two are used, and an inner surface of one of the mold 42 and the lower surface 22 of the glass plate 20 are disposed in a contacting manner. In this example, the mold 42 in which the glass plate 20 is disposed is formed with a surface that contacts the lower surface 22 of the glass plate 20 and a suction section 45 that is in communication with the outside of the mold 42. Due to sucked air in the suction section 45 to the outside, the glass plate 20 is held in a suctioned state to the inner surface of the mold 42.

Next, the molds (41, 42) are closed and clamped. As a result, there is formed a cavity 44 to be filled with the melted resin 110 that becomes the frame body 10 in the end (Fig. 5D). In the case that the melted resin 110 is injected into the molds (41, 42) (Fig. 5E), the resin layer 30 printed to the peripheral edge of the lower surface 22 of the glass plate 20 is melted by the heat from the melted resin 110. When the melted resin 110 cools down, the lower surface 31 of the resin layer 30 and the upper surface 14 of the edge portion 13 of the frame body 10a are integrally fixed as the both resins are compatibly melt-bonded. Then, after the melted resin has cooled, the front cover 1a which is the molded product is taken out of the molds (41, 42)(Fig. 5F).

According to the manufacturing method of the glass integrally molded product according to the above first embodiment (below, referred to as a molded product manufacturing method), the pressure applied to the part of the glass plate 20 that contacts the melted resin 110 at the time of clamping and at the time of injection molding is reduced by the resin layer 30 formed in the contacting part. In other words, the resin layer 30 functions as a buffer at the time of injection molding. Thus, glass insert molding of a glass integrally molded product such as front cover 1a becomes practically applicable in which the upper surface 21 of the glass plate 20 and the upper surface 11 of the frame body 10a form a continuous surface without breaking the glass plate 20 at the time of injection molding. Since the periphery of the lower surface 22 of the glass plate 20 and the upper surface 14 of the edge portion 13 of the frame body 10a are fixed in an integrated state, the glass plate 20 and the frame body 10a are strongly adhered and extremely high reliability can be realized and also sufficient waterproof performance can be achieved with regards to the peripheral edge of the glass plate 20. Of course, with glass insert molding, the manufacturing cost of the front cover 1a can also be reduced.

### <Modified Example of Front Cover>

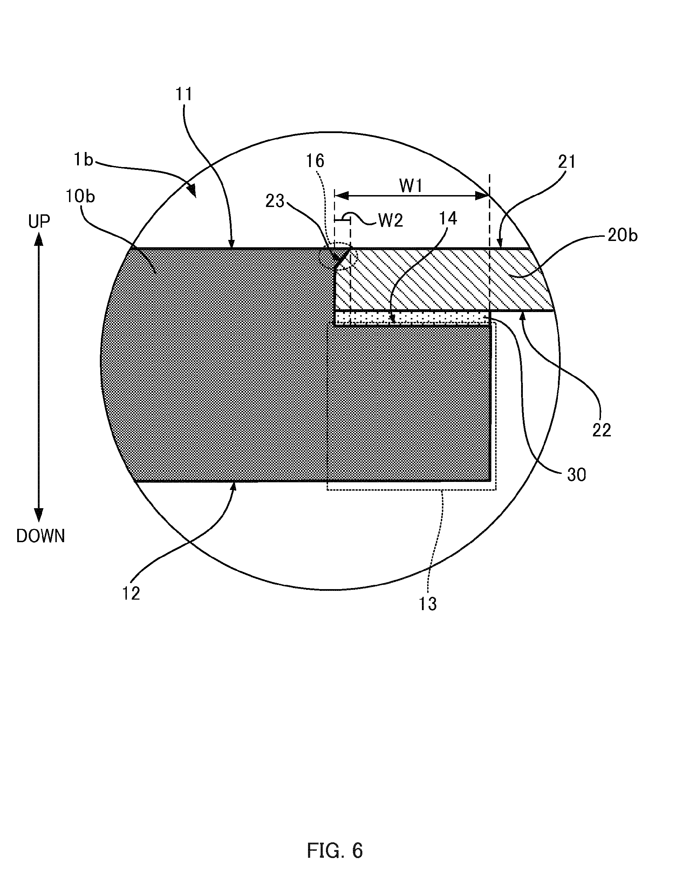

By the way, with a glass plate integral component such as a conventional front cover 1, in order to further improve continuity of the peripheral edge of the upper surface 21 of the glass plate 20 and the upper surface 11 of the frame body 10 and also to make it difficult for waterdrops and the like from above to enter between the glass plate 20 and the frame body 10, the peripheral edge of the upper surface 21 of the glass plate 20 is beveled and a part that overhangs so as to cover the beveled part from above is formed in the inner peripheral edge of the upper surface 11 of the frame body 10. Fig. 6 shows as a modified example of the front cover (1, 1a), a sectional view of a front cover 1b in which an overhanging part (below, referred to as canopy portion) 16 is formed to the frame body 10b. Note that, the sectional diagram shown in this diagram corresponds to inside the circle in Fig. 4A.

By the way, in the case of manufacturing the front cover 1b shown in Fig. 6 with the conventional method, the frame body 10b having the canopy portion 16 and the edge portion 13 has to be molded integrally as a single component. In other words, a groove that extends around the inner periphery of the frame body 10b between the canopy portion 16 and the edge portion 13 is molded at the same time. Thus, the mold for molding the frame body 10b as a single unit needed an undercut processing. Thus, the configuration of the mold became complicated and it was difficult to decrease the manufacturing cost. The glass plate 20 was to be fitted into the groove part between this canopy portion 16 and the edge portion 13, and too much stress was applied on the glass plate 20 and the frame body 10b, and there was a possibility of breaking the glass plate 20 and the frame body 10b.

By applying the molded product manufacturing method of the first embodiment, the melted resin 110 can be filled to smooth the beveled slanted surface 23 at the time of injection molding, and the front cover 1b having the glass plate 20 integrated with the frame body 10b can be taken out in a completed state from the molds (41, 42). Thus, the undercut process to form the canopy portion 16 becomes unnecessary, and there is no increase in cost of the molds (41, 42).

The front cover 1a previously shown in Fig. 4 uses the glass plate 20 having the upper surface 21 and the lower surface 22 with the same shape and the same area. Thus, when the width W1 of the resin layer 30 is widened, the display region of the display panel to be disposed below the glass plate becomes narrow, so that the width of the resin layer 30 cannot be widened so much. On the other hand, in the case the width W1 of the resin layer 30 is narrowed, there is a possibility that adhesive strength between the resin layer 30 in the edge portion 13 and the frame body 10a decreases.

In the case of the front cover 1b shown in Fig. 6, in which only the upper surface portion 21 of the glass plate 20b is beveled, namely in the case that the peripheral region of the upper surface is included inside of the region formed with the periphery of the lower surface 22 of the glass plate 20b, the part hidden below the canopy portion 16 (the part with a width W2 in the figure) in the periphery of the lower surface 22 of the glass plate 20b does not contribute to display, thus the resin layer 30 can also be provided in this part and the width W1 of the resin layer 30 can be substantially widened. Thus, the adhesive strength can be sufficiently ensured, without sacrificing the display area of the display panel.

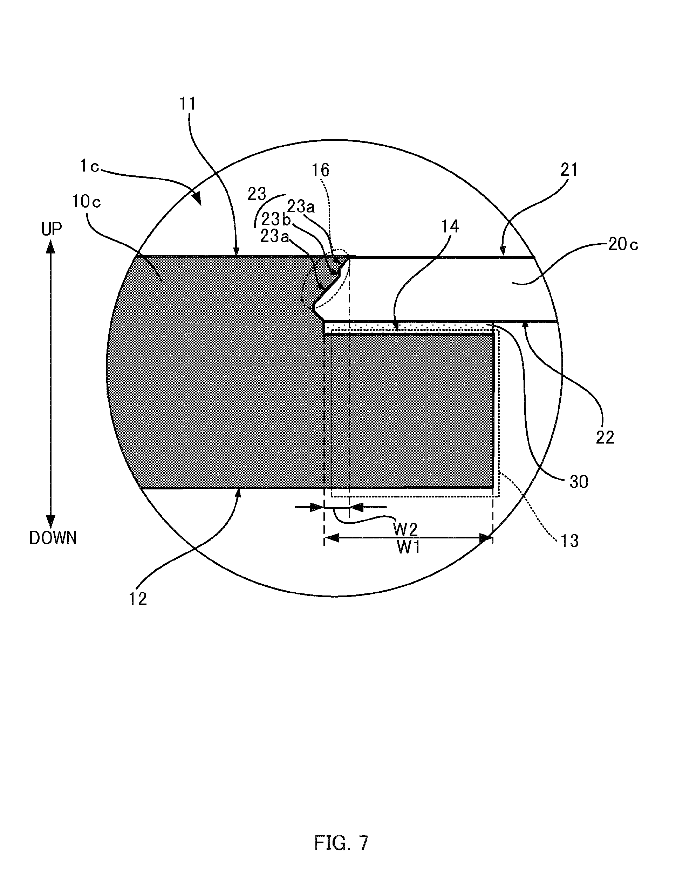

Note that, the edge to the upper surface 21 side of the glass plate 20b, as with the front cover 1b shown in Fig. 6, is not limited to a simple beveled shape, and the shape of the side surface from the upper surface 21 to the lower surface 22 may be in a line graph-shape. For example, with the front cover 1c shown in Fig. 7, the side surface of the glass plate 20b is in general formed to be a slanted surface 23 that is inclined to the frame inner side of the frame body 10c upwardly, and a vertical wall surface 23b is formed in a part of the slanted surface 23. Thus, the side surface of the glass plate 20b is formed to have a sectional shape of a line shape with two slanted surfaces 23a continuous via a wall surface 23b.

In any case, the lower surface 22 of the glass plate (20b, 20c) may be a shape including the region of the upper surface 21, and may be formed with a slanted surface 23 on the side surface of the glass plate (20b, 20c). Note that, in the case the side surface of the glass plate 20c is a line shape formed with a plurality of slanted surfaces 23a, as with the front cover 1c shown in Fig. 7, the canopy portion 16 and the side surface of the glass plate 20c are combined in a complicated way, and an effect that the glass plate 20c is surely prevented from falling off upwards can be expected.

### == Second Embodiment ==

### <Decoration to Frame body>

With a glass integral component to be a part of an outer case of an electric appliance such as a front cover of a smartphone, decoration is made in many cases on such as an upper surface 11 of a frame body or an outer side surface of a side wall 15, on a surface which is exposed to the outside as an outer case (below, referred to as an outer surface) . There are cases where the decoration is performed in a limited way on a part of an outer surface of the frame body, with such as a logo of a product, and there are cases where the decoration is performed on an entire region of the outer surface imitating other material (such as metal). Below, as a second embodiment of this invention, with the first embodiment as a precondition, there is described a molded product manufacturing method to perform decoration with high reliability at low cost on a frame body of a front cover.

### <Configuration of Glass integrally molded product>

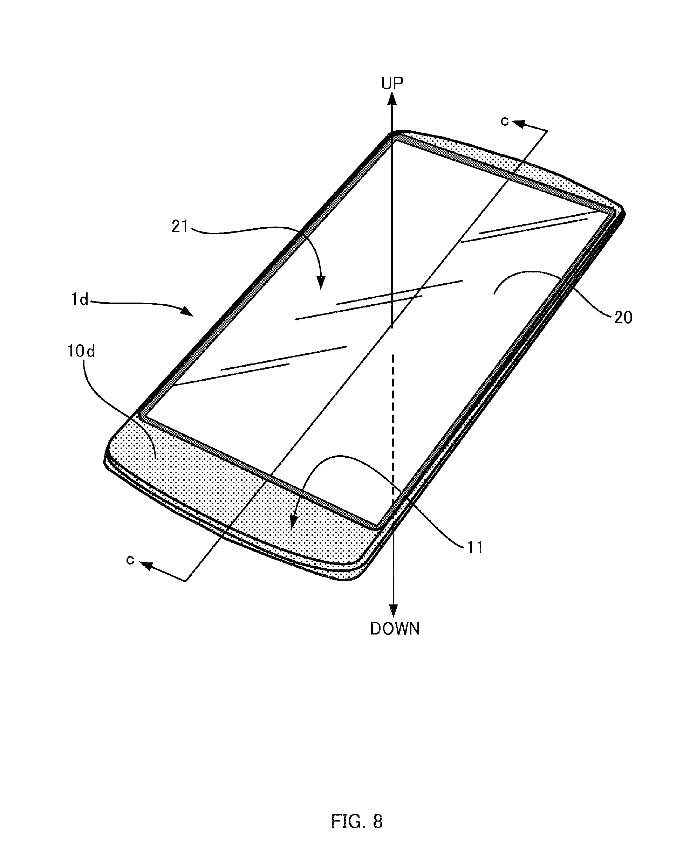

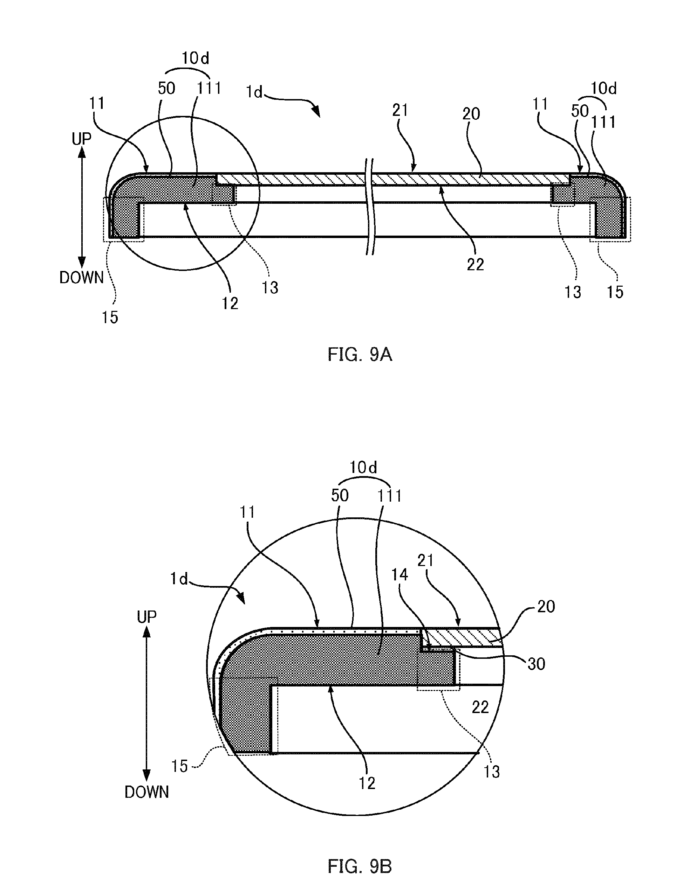

Fig. 8 shows an external view of a front cover 1d manufactured in the Second Embodiment. Fig. 9A and Fig. 9B show a c-c arrow sectional view of Fig. 8. Note that, Fig. 9B is an enlarged view of inside the circle in Fig. 8A. The frame body 10d of the front cover 1d shown here is a configuration in which a decoration film layer 50 made of a film formed with a decoration design is adhered to an entire outer surface region of a frame body 111, the frame body 111 having a similar configuration to the frame body 10a of the front cover 1a in the first embodiment. On the upper surface 11 of the frame body 10d, an outer layer of the decoration film layer 50 forms a continuous surface with the upper surface 21 of the glass plate 20. In Fig. 8, the thickness of the decoration film layer 50 is exaggerated so that the detailed configuration of the frame body 10d is easy to understand. Below, the manufacturing method of this front cover 1d is explained as the Second Embodiment.

### <Transfer Film>

The Second Embodiment, based on the First Embodiment, has a feature of using an in-mold molding technique to perform decoration to an outer surface of the frame body 111. As is well-known, with in-mold molding technique, a transfer film in which a film to be the base (below, base film) is laminated with a film (a decoration film) formed with a design, characters, or a pattern imitating other material (below, decoration design) to be the decoration is sandwiched inside the molds of the injection molding machine and melted resin is injected, and the decoration film is transferred to the resin with heat from the base film.

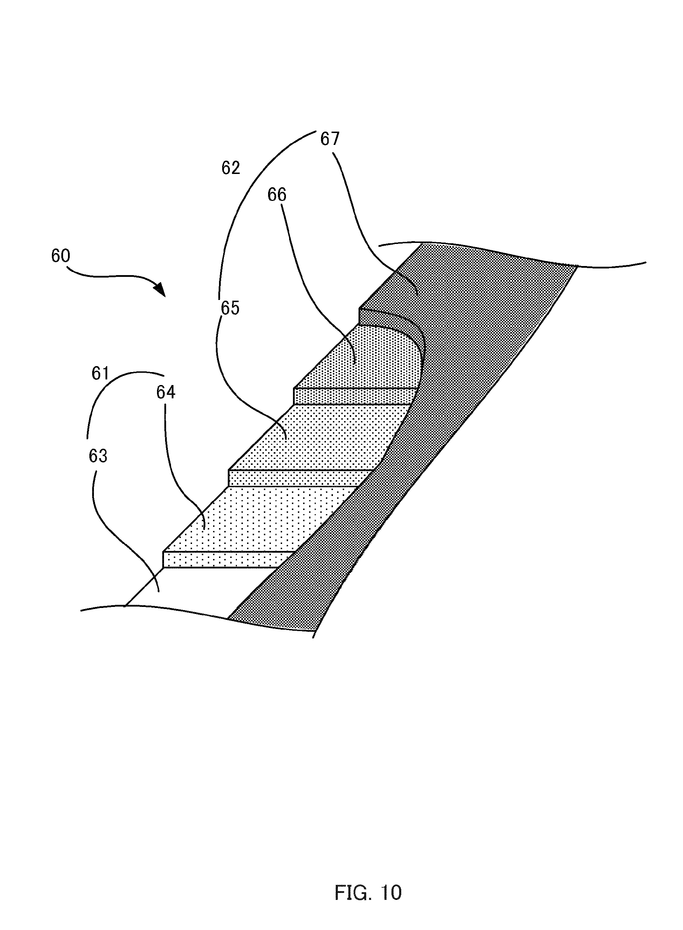

Fig. 10 shows a partially cutaway perspective view of a general transfer film 60. The transfer film 60 has a basic configuration in which the decoration film 62 is laminated on the base film 61, and the base film 61 is laminated with a base body 63 made from a film material such as a PET film and a parting layer 64 that makes only the decoration film 62 come off correctly from the base film 61. On the other hand, the decoration film 62 is a configuration in which the decoration design layer 66 formed with a decoration design by such as printing or vapor deposition is sandwiched between a protecting layer 65 arranged to the base film 61 side and an adhesive layer 67 having compatibility with the melted resin and facing the outside. In in-mold molding, the parting layer 64 and the protecting layer 65 can part at their boundaries.

### <Manufacturing Method>

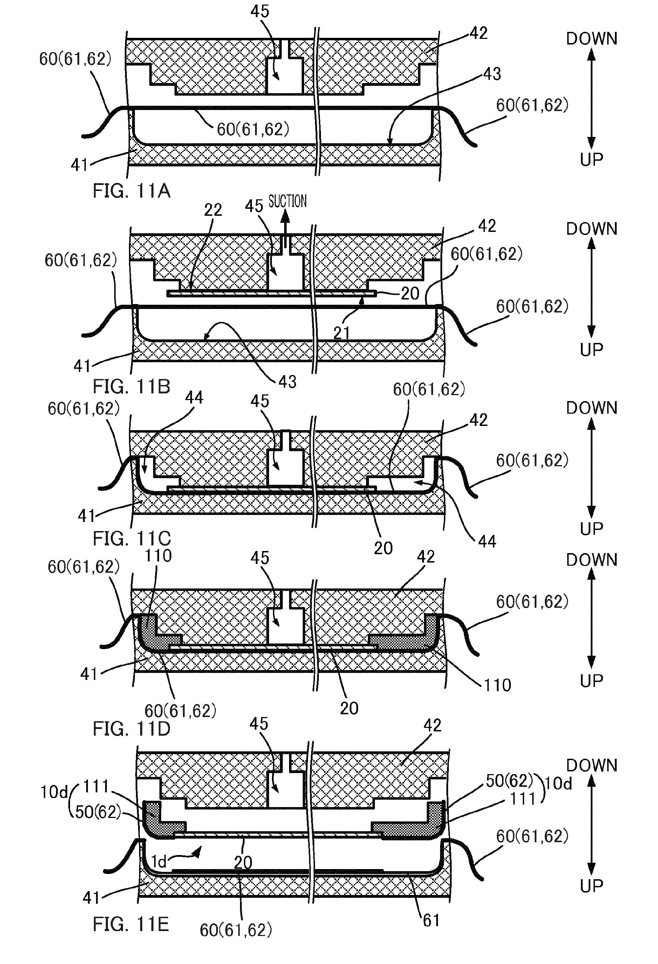

Fig. 11A to Fig. 11E show a flow of a molded product manufacturing method according to the second embodiment. First, the rim of the lower surface 22 of the glass plate 20 is printed and formed a resin layer 30 in advance, similar to in Fig. 5A and Fig. 5B. The transfer film 60 is put across the mold 41 to the side that the glass plate 20 is not disposed (Fig. 11A). At this time, the transfer film 60 is put across so that a base film 61 side is facing an inner surface 43 of the mold 41. In other words, the decoration film 62 side faces the mold 42. Next, the glass plate 20 is disposed inside the mold 42, and the transfer film 60 is interposed between the inner surface 43 of the mold 41 and the upper surface 21 of the glass plate 20 (Fig. 11B). Then, the molds (41, 42) are closed, and the transfer film 60 is sandwiched between the molds (41, 42) (Fig. 11C). Note that, in this example in order to decorate the entire outer surface region of the frame body 111 (refer to Fig. 9), the configuration of the molds (41, 42) are slightly different to those shown in Fig. 5.

In the case where the molds (41, 42) are closed, the melted resin 110 is injected into the molds (41, 42) (Fig. 11D). Thus, the decoration film 62 side of the transfer film 60 comes into contact with the melted resin 110 and that contacting surface becomes a compatible state with the melted resin. When the melted resin 110 cools, the decoration film 62 parts from the base film 61, and the decoration film 62 is adhered to the outer surface of the frame body 111 and the decoration design is transferred. On the other hand, with the transfer film 60, the region contacting the glass plate 20 does not contact with the melted resin 110, and the decoration film 62 does not part from the base film 61. In other words, the decoration design is not transferred to the upper surface 21 of the glass plate 20, and the decoration design is transferred selectively to only the outer surface of the frame body 111 (Fig. 11E).

### <Effect of Second Embodiment>

With the conventional glass integrally molded product 1 shown in Fig. 1 only the frame body 10 is injection molded as a single body. In the case that this conventional frame body 10 is to be decorated by applying an in-mold injection technique, the upper inner periphery of the frame body 10 becomes a sharp edge, and the transfer film 60 tears or wrinkles gather in corner parts of a rectangular opening of the frame body 10 in which the glass plate 20 is to be fitted, and decoration quality deteriorates. Thus, conventionally, the frame body 10 that has been molded is silk printed or a film printed with a decoration design is attached on the frame body to perform decoration. Thus, in the conventional molded product manufacturing method, there were many manufacturing processes and cost-reduction was difficult.

With the molded product manufacturing method according to the Second Embodiment, the glass integrally molded product is manufactured by glass insert molding so that a continuous surface is formed with the upper surface 21 of the glass plate 20 and the frame body 10c. In other words, with the molded product manufacturing method according to the First Embodiment as a precondition, the manufacturing method of the Section Embodiment becomes possible. In the Second Embodiment, decoration can be performed at the same time as molding of the frame body 111 by using an in-mold molding technique on a substantially flat surface. Thus, high quality decoration can be performed at a low cost.

### === Third Embodiment ===

### <Regarding Decoration to Glass plate>

The upper surface area of the glass integrally molded product is mostly occupied by a glass plate. Thus, it was difficult to show the design feature. For example, although the front cover of a smartphone is a component that greatly influences the design feature of the product, only a small region on an outer surface of the frame body on the front cover can be used to perform decoration to appeal the features of the product. Thus, the smartphone has no choice but to have a design that are all similar except the outer shape, and it is difficult to differentiate the smartphone in design from products made by other companies. The outer shape also becomes an almost similar shape when considering portability and operability.

Of course, decoration to the glass plate itself can also be considered, but in order to perform decoration to the glass plate, some processes for the decoration will have to be added, causing cost increase. The glass plate will be decorated by printing or sticking on a film, but in the case of using it as a cover glass for a touch panel, the upper surface of the glass plate will be constantly rubbed with fingers operating the device. Even if it is not a cover glass for a touch panel, in the case that it is a display panel that is to be protected by a cover glass, in order to see some display through this glass plate, there are cases of wiping dirt off to ensure visibility at all times. In other words, the glass plate is in an environment where friction is always applied with fingers, cloth, and the like, and there is concern of deterioration over time of the decoration. Thus, as in the second embodiment, when compared to decoration formed on the surface of the resin by in-mold molding, decoration on the glass plate 20 is prone to deteriorate over time. Further, with such as the front cover of the smartphone, a coating to improve various optical characteristics and improve strength is performed on the upper surface side of the glass plate, thus adhesiveness to other material (such as an adhesive) is weak. In other words, by adhering film and the like, decorating per se becomes difficult. As the third embodiment, there is described a molded product manufacturing method in which decoration with high durability can be performed on a glass plate at low cost.

### <Configuration of Glass integrally molded product>

The third embodiment is achieved by developing the molded product manufacturing method in the first embodiment. Specifically, in the first embodiment, the resin layer 30 was formed by printing to the rim of the lower surface 22 of the glass plate 20, so as to protect the glass plate 20 at the time of injection molding of the frame body 10a, and to strongly adhere the resin configuring the frame body 10a and the glass plate 20 so as to increase waterproof performance. In the third embodiment, the resin layer 30 is to also be a decoration.

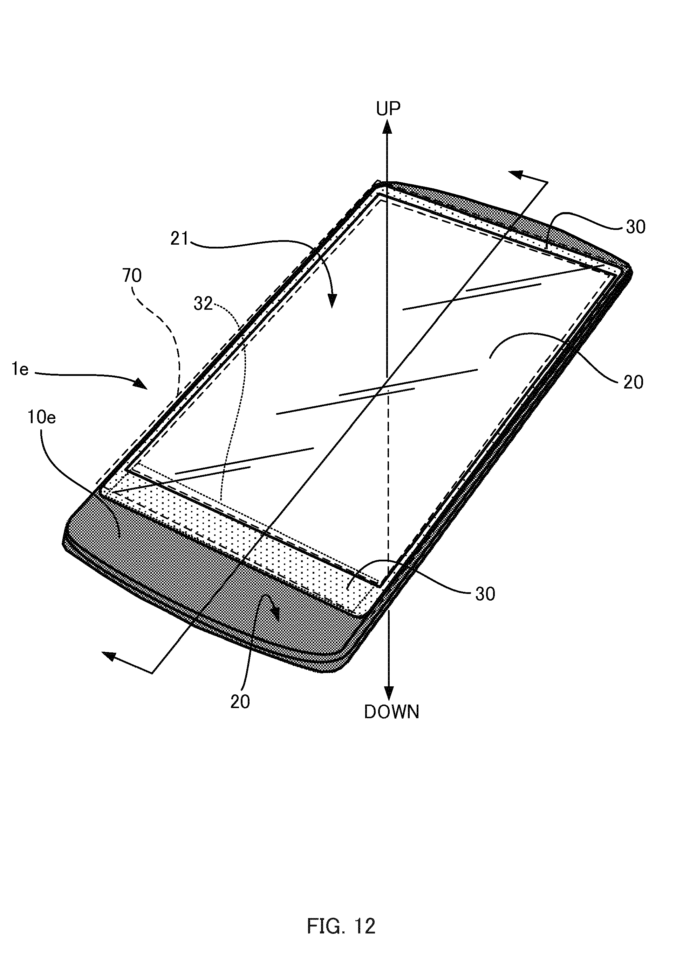

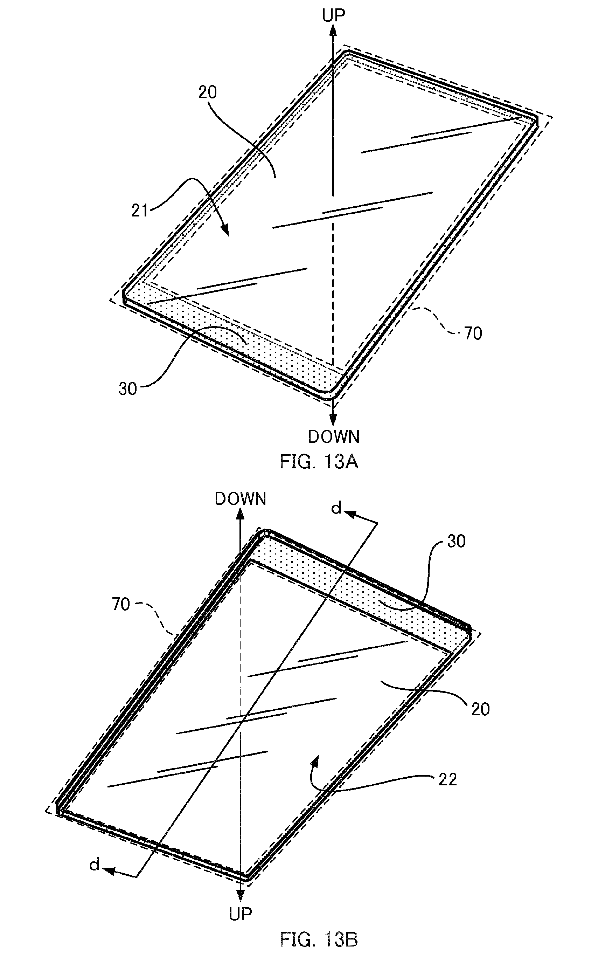

Fig. 12 shows a perspective view from above of an example of a front cover 1e using a resin layer 30 also as decoration. Fig. 13 shows the glass plate 20 in a state where the resin layer 30 that functions also as a decoration is formed by printing. Fig. 13A is a perspective view of the glass plate 20 seen from above, and Fig. 13B is a perspective view of the glass plate 20 seen from below. A decoration region (large dot region) 70 is formed so as to go around the periphery of the glass plate 20. This decoration region 70 is formed so that the resin layer 30 printed to the lower surface 22 side of the glass plate 20 is visible from the upper surface 21 side of the glass plate 20.

For the resin layer 30 to function as a decoration, it can be realized by, for example, using resin material that has a predetermined colored appearance in the resin layer 30, or using resin dispersed with pigments. Further, since the resin layer 30 is formed by printing, it is not limited to a shape that surrounds the glass plate 20 and it can be formed as designs or characters. Since the decoration is formed on the lower surface 22 of the glass plate 20, in principle no deterioration over time due to friction occurs. Compared to decoration that is exposed to the outside, deterioration over time due to the surrounding environment and the like (such as humidity, ultraviolet rays) is also greatly reduced. In particular, since the glass absorbs ultraviolet rays, great improvement in light resistance can be expected.

### <Regarding configuration of Resin layer>

As described above, the third embodiment has a feature of using the resin layer 30 on the lower surface 22 of the glass plate 20 as decoration. The original purpose of this resin layer 30 however, is to make the glass integrally molded product possible without breaking the glass at the time of molding. Thus, it would be preposterous if the original function of the resin layer 30 is lost to improve the function as the decoration. Ideally, it is preferable to balance the original function and the decorative function at a high level. The resin layer 30 can be a two-layer configuration formed of a layer that functions as a decoration (decoration layer) and a layer of resin that functions as a buffer material at the time of injection molding (buffer layer). The decoration layer may also function as the buffer layer, and the layer that is formed at the lower layer of the decoration layer may be a layer of a binder (adhesive layer) that adheres the decoration layer to the frame body. The two layers may both function as the buffer layer. Further, it is not limited to two layers, and there may be equal to or more than two layers of resin laminated to the lower surface of the decoration layer.

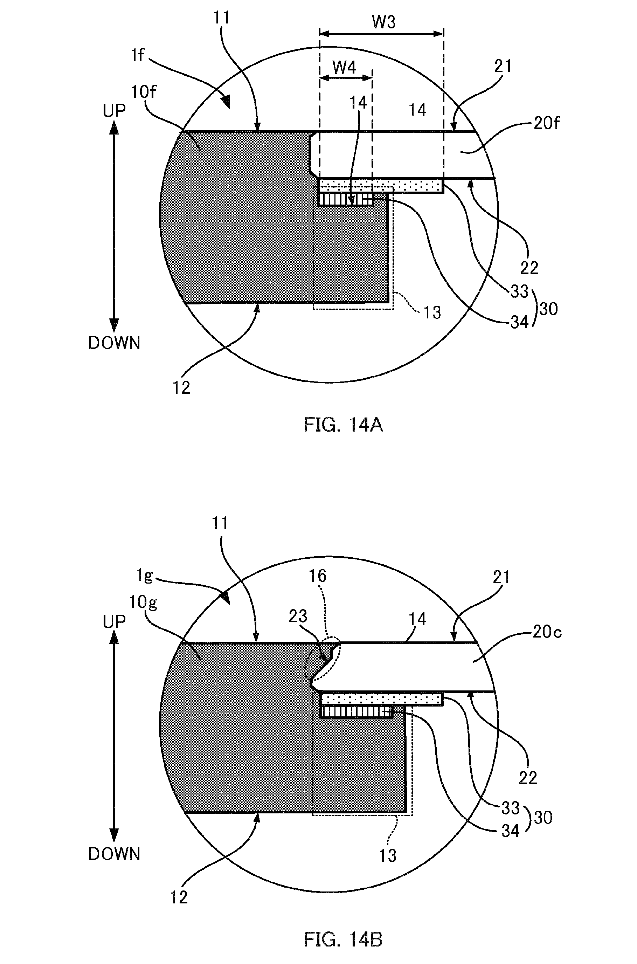

Fig. 14 illustrates front covers (1f, 1g) having a two resin layers 30 for reference. Fig. 14 is an enlarged view of main parts of the front covers (1f, 1g), Figs. 14A and 14B are different only in cross section of the glass plates (20f, 20c), and the resin layers 30 of each of the front covers (1f, 1g) are the same.

The glass plate 20f of the front cover 1f shown in Fig. 14A is beveled at both surfaces of the upper surface 21 and the lower surface 22. As to front cover 1g shown in Fig. 14B, similar to the front cover 1c shown in Fig.7, the region of the upper surface 21 of the glass plate 20f is included within the region of the lower surface 22 thereof, and the glass plate 20c has side surfaces in a line graph shape. Further, the resin layers 30 of the front covers (1f, 1g) shown in Fig. 14A and Fig. 14B is a two layer configuration made of the upper layer decoration layer 33 and the lower layer adhesive layer 34. Further, here is shown an example in which a width W3 of the decoration layer 33 is wider than a width W4 of the adhesive layer 34, and further the width W4 of the adhesive layer 34 is narrower than an upper surface 14 of the peripheral portion 13 of the frame body (10f, 10g). In other words, the peripheral portion 13 of the frame body (10f, 10g) surrounds the side surfaces of the adhesive layer 34, and the peripheral portion 14 encloses the adhesive layer 34 and contacts the lower surface of the decoration layer 33. In this way, the contacting area of the adhesive layer 34 and the frame body (10f, 10g) becomes large, and dropping out and moving of the glass plate (20f, 10c) can be surely prevented.

Note that, in the front covers (1f, 1g) shown in Fig. 14A and Fig. 14B, the outer side peripheries of the decoration layer 33 and the adhesive layer 34 are both aligned, and the adhesive layer 34 is formed only in an upper side of the peripheral portion 13, and the decoration layer 33 is formed to extend to the inner side of the glass plate (20f, 20c). But, with the front cover 1g shown in Fig. 14B, seen from above, the region of the upper surface 21 of the glass plate 20c is included in the region of the lower surface 22 thereof. Further, the glass plate 20c has the side surface that is a slanted surface inclined outwardly from the upper surface to the lower surface. Thus, comparing the front cover 1f shown in Fig. 14A with the front cover 1g in Fig.14B, the regions that function as the decoration are equal but the width of the adhesive layer 34 in Fig. 14B can be more widely provided, thereby enhancing the functions of decoration and adhesion with good balance.

### <Manufacturing Method>

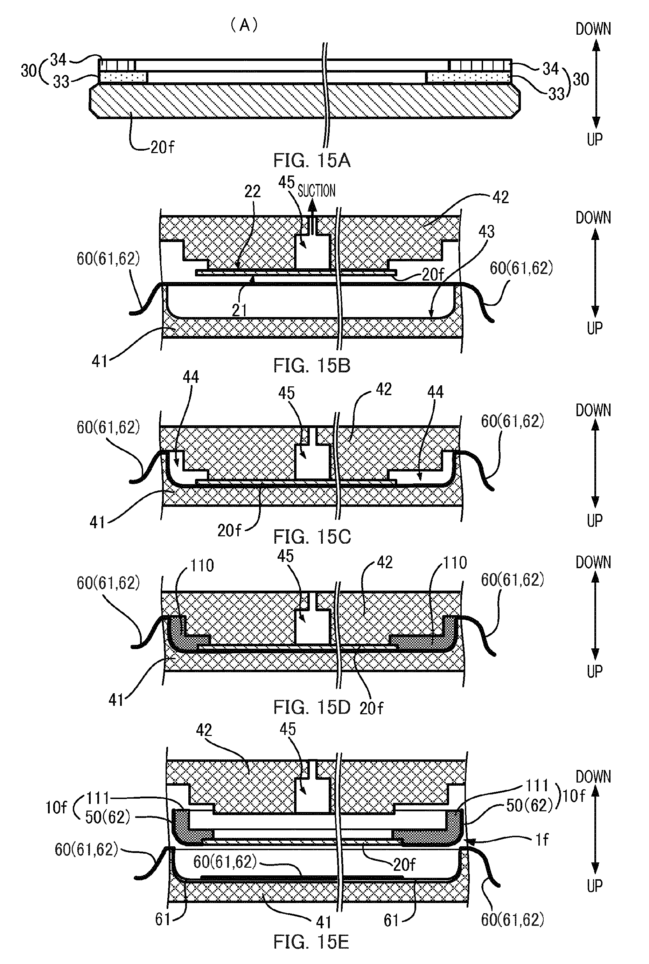

Hereinbelow, as the third embodiment, the manufacturing method of the front cover 1f shown in Fig. 14A is described. Fig. 15A to Fig. 15E show the flow of the molded product manufacturing method according to the third embodiment. First, as shown in Fig. 15A, the rim of the lower surface 22 of the glass plate 20f is printed and formed with the resin layers 30 in advance. Fig. 15A corresponds to a d-d arrow sectional view in Fig. 13B. Here the resin layers 30 that are printed and formed are different from that in the first or the second embodiment, and has a two-layer configuration in which a second layer 34 is printed and formed to a lower side of a first layer 33 which is contacting the lower surface 22 of the glass plate 20f. Here, the first layer is the decoration layer 33 which also functions as a buffer layer, and the second layer is the adhesive layer 34.

The resin that forms the decoration layer 33 is visualized through the upper surface 21 of the glass plate 20f and functions as a decoration. Further, this decoration layer 33 functions as a buffer material at the time of injection molding and also needs to be considered regarding adhesiveness with the glass plate 20f, thus in this example resin ink dispersed with pigments in acrylic urethane resin is used. The resin that forms the adhesive layer 34 functions as a binder to strongly adhere the decoration layer 33 and the resin configuring the frame body 10f. Thus, the above resin is excellent in adhesiveness with the resin forming the decoration layer 33, and is required to be compatible with the resin forming the frame body 10f. In this example, a transparent acrylic resin is used, in consideration of the function that it does not interfere with the decoration function of the decoration layer 33. Note that, here the thickness of the decoration layer 33 and the adhesive layer 34 are both 4 µm. Of course, as long as the original function of the resin layer 30 is not damaged, the thickness of each layer (33, 34) can be appropriately ajusted. For example, by appropriately increasing and decreasing the thickness of the decoration layer 33 for decoration, various designs can be achieved. The shade of the color of the decoration portion can be controlled with the thickness of the decoration layer 33. By making the thickness of the decoration layer 33 thin, the color of the resin configuring the frame body 10f, or in the case the adhesive layer 34 is not a transparent color, the color of the adhesive layer 34 that can be made transparent to the upper side, can be mixed with color of the resin configuring the frame body 10f and the decoration layer 33.

Next, the glass plate 20f having the two-layer configuration resin layers 30 is disposed in the molds (41, 42)(Fig. 15B). Here, similar to the second embodiment, the frame body 10f provided with the decoration layer 50 on an outer surface of the frame body 111 is molded. A transfer film 60 is interposed in between the glass plate 20f and an inner surface 43 of the mold 41 which is a side that the glass plate 20f is not arranged to. In this state the molds (41, 42) are closed, and the transfer film 60 is sandwiched with the molds (41, 42)(Fig. 15C). Then, the melted resin 110 is injected into the molds (41, 42) (Fig. 15D). Thus, a decorative design is transferred to the outer surface of the frame body 111, and the melted resin 110 fixes to the adhesive layer 34 of the resin layer 30 of the glass plate 20f. After cooling, the molds (41, 42) are opened, and the molded front cover 1f is taken out (Fig. 15E).

The glass integrally molded product such as the front cover 1f molded with the molded product manufacturing method according to the third embodiment has a decoration on the lower surface 22 of the glass plate 20f, and has an excellent durability. The decoration to the glass plate 20f is formed only by the process to print and form the resin layer 30 to the glass plate 20f. Further, by using this glass plate 20f, the frame body 10f is formed by glass insert molding, thus the glass integrally molded product is provided. In other words, the glass integrally molded product with the decoration made on the glass plate 20f can be manufactured cheaply.

In the case that the resin layer 30 printed to the lower surface 22 of the glass plate 20f is to be a two-layer configuration of the decoration layer 33 for decoration and an adhesive layer 34 that functions as a binder between the decoration layer 33 and the frame body 10f, then the original function of making the glass insert molding of the glass integrally molded product possible and the decorative function, of the resin layer 30, can be attained with a balance at high level.

Note that, the resin layer 30 does not have to be a two-layer configuration of the decoration layer 33 for the decoration and the adhesive layer 34, and may be a configuration that has equal to or more than three layers. For example, if the resin is printed in one region on the upper surface of the decoration layer 33, it is possible to visualize a logo with the decoration layer 33 as a background, through the upper surface 21 of the glass plate 20, and further improve the design. Of course, in view of the manufacturing cost and the design of the product, the resin layer 30 can be a single layer configuration. In any case, the upper surface side of the resin layer 30 that can be visualized through the upper surface 21 of the glass plate 20 can be used for decoration, and the lower surface side can be used for adhesion with the frame body 10f.

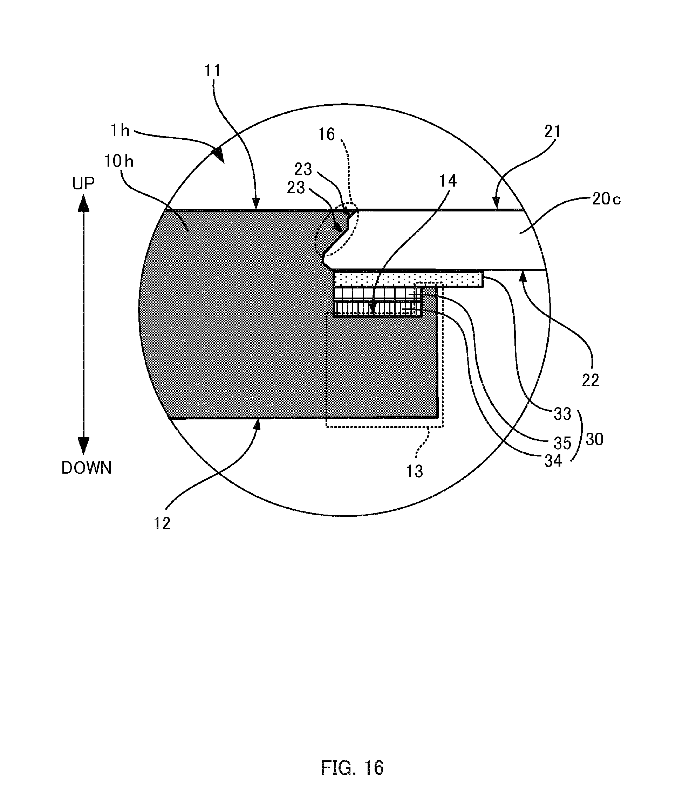

Further, the original function of the resin layer 30 is as a buffer material to the pressure at the time of injection molding, and for example, in the case that the resin layer 30 is made as a configuration with equal to or more than three layers, as the intermediate later other than a first uppermost layer and the lowermost layer, resin excellent in buffer function and that can relatively elastically deform more easily than the resin that sandwiches the intermediate layer may be used. Fig. 16 shows an example of a front cover 1h having a three-layer configuration resin layer 30. In the example shown here, similar to the previous Fig. 15B, the glass plate 20c with the side surfaces that are in a line graph-shape is used, and around the lower surface 22 of the glass plate 20c is formed the resin layers 30 with three layers. The intermediate layer 35, in the resin layers 30, is formed of resin that can more easily elastically deform (for example, urethane resin, elastomer, rubber, and the like) than the resin that forms the uppermost decoration layer 33 and the lowermost adhesive layer 34 (for example, acrylic resin). Note that, the intermediate layer 35 may be formed by printing, or may be formed by adhering a frame shaped resin sheet and the like. In any case, the resin that forms each of the layers at the time of injection molding melts and sticks to each other, so there is little possibility of each layer coming off from each other.

### === Other Embodiments ===

In the above embodiments, by forming the resin layer 30 around the rim of the lower surface 22 of the glass plate (20, 20b, 20c, 20f), the pressure applied to the glass plate (20, 20b, 20c, 20f) at the time of glass insert molding is alleviated, and damage and the like to the glass plate (20, 20b, 20c, 20f) is prevented. By further developing this technical idea, resin that can more easily elastically deform and that is relatively soft (for example, urethane resin) than resin that forms the resin layer 30 (for example, acrylic resin) can be formed to go around the rim of the glass plate (20, 20b, 20c, 20f).

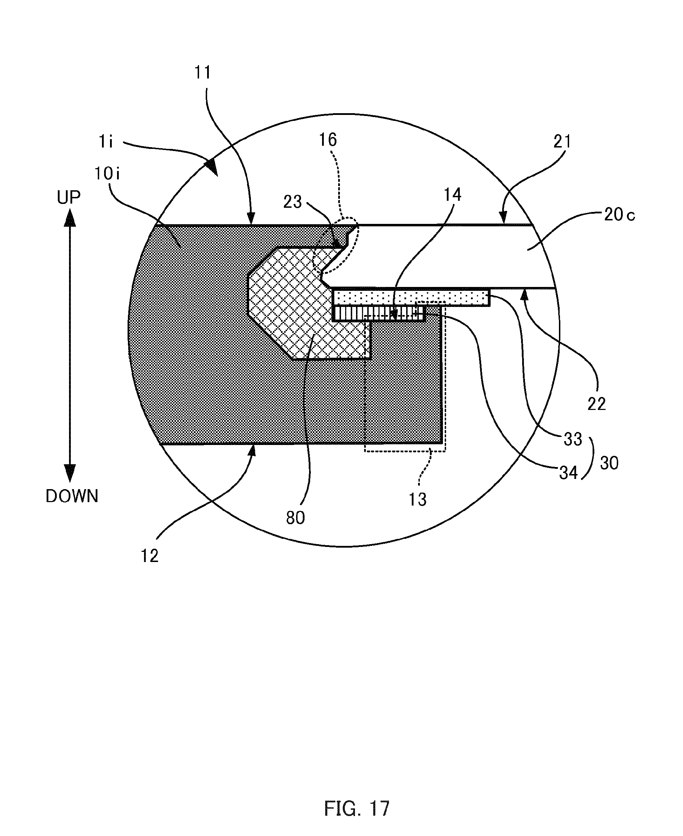

Fig. 17 shows an example of the front cover 1i with a pressure buffer portion 80 made of the resin with high elasticity formed in the periphery of the glass plate 20c. This front cover 1i has the resin layer 30 and the glass plate 20c similar to that in the front cover 1g shown in Fig. 14B, and the pressure buffer portion 80 is provided around the side surface of the glass plate 20c formed with the resin layers 30. Specifically, the pressure buffer portion 80 is formed from the lower side of the side surface of the glass plate 20c to cover a part of the lower surface of the resin layer 30.

As a method of forming this pressure buffer portion 80, the ring-shaped pressure buffer portion 80 is formed around the glass plate 20c in advance and then an injection molding of the frame body may be performed. Alternatively, the pressure buffer portion 80 may be formed around the glass plate 20c by a first glass-insert molding, and then a second glass-insert molding can be performed again using different molds in which the glass plate 20c with the pressure buffer portion 80 formed in the first glass insert molding is set and finally the front cover 1i shown in Fig. 17 may be completed by injection of the melted resin for the frame body. In other words, the glass plate 20c is formed with the resin layers 30 that functions as the buffer material, thus the pressure buffer portion 80 can also be glass-in molded.

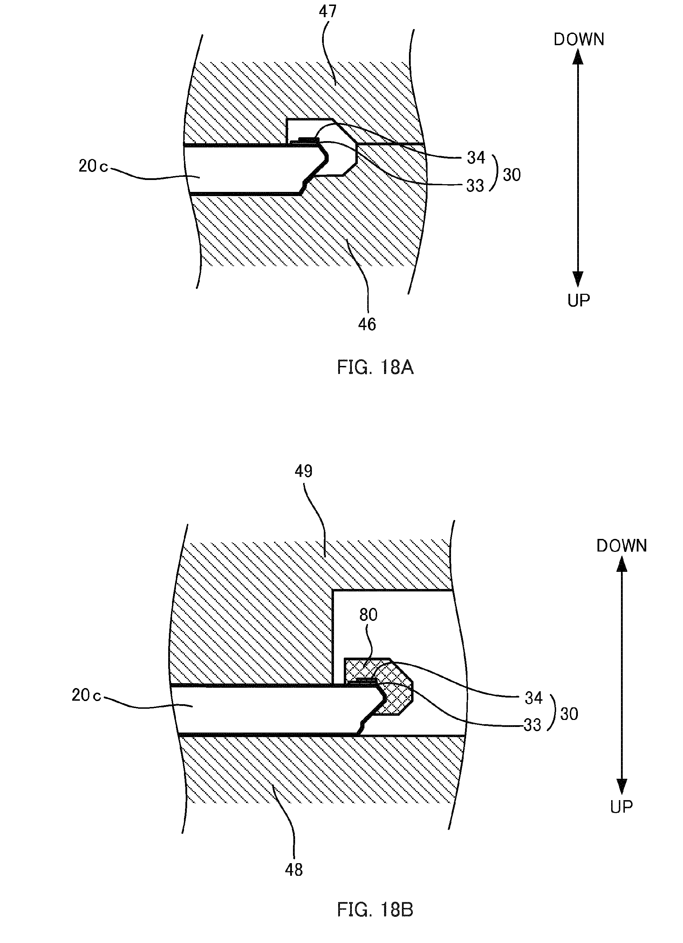

Fig. 18 shows schematic diagrams of molds (46-49) for manufacturing the front cover 1i integrated with the pressure buffer portion 80. Fig. 18A is a sectional view of the molds (46, 47) for forming the pressure buffer portion 80, and Fig. 18B is a sectional view of the molds (48, 49) for forming the front cover 1i in the end. First, as shown in Fig. 18A, the glass plate 20c formed with the resin layers 30 is arranged inside the molds (46, 47), and then the pressure buffer portion 80 is formed by injection of the buffer material. Then, as shown in Fig. 18B, a glass plate 29c formed with the pressure buffer portion 80 is arranged inside different molds (48, 49), and a frame body 10i is formed so as to cover the pressure buffer portion 80.

### === Application Range of this invention ===

As embodiments of this invention, methods to manufacture the front cover of the smartphone by glass-insert molding were disclosed. Of course, this invention is not limited to the smartphone and may be applied to various articles, such as portable phones, portable music players, flat panel displays of such as navigation systems for vehicles, finders and displays of digital cameras.

Further, the upper surface shape of the glass plate is not limited to a substantially rectangular shape, and may be an appropriate shape such as a polygonal shape or a circular shape. In a case that an upper surface of the glass plate is a complex shape, by applying the manufacturing method of the glass integrally molded product of this invention, a frame body having an inner peripheral shape along the shape of the glass can be molded without using a complex mold.

### Industrial Applicability

This invention is appropriate as a manufacturing method of a front cover that protects a display panel such as a touch panel of a smartphone.

### Reference Signs List

1, 1a-1i glass integrally molded product (front cover), 10, 10a-10i frame body, 13 edge portion, 20, 20b, 20c, 20f glass plate, 21 upper surface of glass plate, 22 lower surface of glass plate, 30 resin layer, 33 first layer (uppermost layer, decoration layer), 34 second layer (lowermost layer, adhesive layer), 35 intermediate layer, 41, 42-49 mold, 50 decoration film layer, 60 transfer film, 61 base film, 62 base body of decoration film, 70 glass decoration region, 80 pressure buffer portion, 110 melted resin, 111 frame body

## Claims

1. A method for manufacturing a glass integrally molded product having a plate glass fixed inwards of a frame body of resin, wherein the frame body has an upper surface to be continuous with an upper surface of the plate glass and an edge portion for supporting a rim of a lower surface of the plate glass,
the method comprising the steps of;
forming a resin layer to the lower surface of the plate glass in a frame shape to extend around the lower rim of the plate glass, the resin layer having compatibility with the resin of the frame body and functioning as a buffer to alleviate stress applied to the plate glass at the time of molding the frame body,
disposing the plate glass in molds to mold the frame body, and
injecting the melted resin into the molds in a closed state to form the frame body,
whereby the lower rim of the plate glass is integrally fixed to the edge portion of the frame body.

2. A method for manufacturing a glass integrally molded product according to claim 1, wherein;

3. A method of manufacturing a glass integrally molded product according to claim 1 or 2, wherein;
the resin layer forming step is carried out by printing a resin on the plate glass, the resin having a function as a decoration at the time when viewed through the upper surface of the plate glass, and
the injection molding step is carried out to mold the frame body into a shape in which the printed layer is visible through the upper surface of the plate glass.

4. A method of manufacturing the glass integrally molded product according to claim 3, wherein;
the resin layer forming step is carried out by printing a resin having a decorative function on the lower surface of the plate glass to form a decoration layer and then printing another resin having compatibility with the resin configuring the frame body on the lower side of the decoration layer to form an adhesive layer.

5. A method of manufacturing the glass integrally molded product according to claim 4, wherein;
an intermediate resin layer is formed in between the decoration layer and the adhesive layer with a resin that is more elastically deformable than the resins that form the decoration layer and the adhesive layer.

6. A method of manufacturing the glass integrally molded product according to claim 4 or 5, wherein;
the upper surface region of the plate glass is included in the lower surface region thereof when seen from above, and a side surface of the plate glass has a slanted surface inclined outwardly from the upper surface to the lower surface,
the resin layer printing step is carried out such that the decoration layer and the lower layer laminated below the decoration layer are aligned in outer edges and that a width of the decoration layer is made wider than the lower layer.

7. The method of manufacturing the glass integrally molded product according to any of claims 1 to 6, further comprising;
a step of forming a pressure buffer portion in between the resin layer printing step and the plate glass disposing step, the buffer portion extending around the side surface of the plate glass in contact with a portion of the lower surface and the side surface of the resin layer, wherein the buffer portion is formed with a resin that is more elastically deformable than the resin forming the frame body and the resin layer.

8. A glass integrally molded product having a plate glass fixed inwards of a frame body of resin, comprising:
the frame body having an upper surface continuous with an upper surface of the plate glass and an edge portion supporting a rim of a lower surface of the plate glass,
wherein the rim of the plate glass supported by the edge portion of the frame body is formed with a resin layer, which is fixed to the upper surface of the edge portion of the frame body and functions as a buffer between an upper surface of the edge portion and the rim of the glass lower surface.

9. A glass integrally molded product according to claim 8, wherein;
the upper surface of the resin layer is decorated so as to be visible through the upper surface of the plate glass.

10. A glass integrally molded product according to claim 9, wherein;
an adhesive layer is laminated to a lower side of the decorated layer and fixed to the upper surface of the edge portion.

11. A glass integrally molded product according to claim 10, wherein;
an intermediate layer is interposed in between the decoration layer and the adhesive layer,
and the intermediate layer is formed of a resin that is more elastically deformable than resins that forms the decoration layer and the adhesive layer.

12. A glass integrally molded product according to claim 10 or 11, wherein;
the upper surface region of the plate glass is included in the lower surface region thereof when seen from above, and a side surface of the plate glass has a slanted surface inclined outwardly from the upper surface to the lower surface,
the resin layers forming the frame shaped decoration layer and the lower layer laminated below the decoration layer are aligned in outer edges, and a width of the decoration layer is made wider than the lower layer.

13. The glass integrally molded product according to any of claims 8 to 12, further comprising;
a pressure buffer portion extending around the side surface of the plate glass in contact with a portion of the lower surface and the side surface of the resin layer, wherein the buffer portion is formed with a resin that is more elastically deformable than the resins forming the frame body and the resin layer.
